# EUROPÄISCHE PATENTSCHRIFT

(11) **EP 4 158 559 B1**
(45) Veröffentlichungstag und Bekanntmachung des Hinweises auf die Patenterteilung: **29.10.2025**
(21) Anmeldenummer: 21725137.0
(22) Anmeldetag: 10.05.2021
(51) Int. Cl.: G06Q 10/00

(54) **VERFAHREN UND VORRICHTUNG ZUR ÜBERWACHUNG EINES FAHRZEUGS**
METHOD AND DEVICE FOR MONITORING A VEHICLE
PROCEDE ET DISPOSITIF DE SURVEILLANCE D'UN VEHICULE

(30) Priorität: 26.05.2020 DE 102020114115
(43) Veröffentlichungstag der Anmeldung: 05.04.2023
(73) Patentinhaber: Bayerische Motoren Werke Aktiengesellschaft, 80809 München (DE)
(72) Erfinder: ZITZEWITZ, Gustav, 81543 München (DE)
(86) Internationale Anmeldenummer: PCT/EP2021/062373
(87) Internationale Veröffentlichungsnummer: WO 2021/239457

(56) Entgegenhaltungen:
- US-A1- 2020 134 934

## Beschreibung

Die Erfindung betrifft ein Verfahren und eine entsprechende Vorrichtung, die es ermöglichen, in zuverlässiger Weise ein Fahrzeug, insbesondere in Bezug auf den Eigentumsstatus des Fahrzeugs, zu überwachen.

Ein Fahrzeug kann im Laufe der Lebenszeit des Fahrzeugs ggf. mehrfach den Eigentümer wechseln. Dabei sind bestimmte Rechte und/oder Pflichten in Bezug auf das Fahrzeug typischerweise mit dem Eigentum an dem Fahrzeug verbunden. Beispielsweise sollte die Möglichkeit eines Fernzugriffs auf das Fahrzeug (z.B. zum Auslesen von Fahrzeugdaten, wie etwa dem Kilometerstand oder dem Füllstand des Kraftstoffbehälters) auf den Eigentümer des Fahrzeugs beschränkt sein. Andererseits ist es typischerweise eine Aufgabe des Eigentümers für eine ausreichende Wartung des Fahrzeugs zu sorgen. US 2020/134934 A1 beschreibt ein System zur Ermittlung von Fahrzeugdaten.

Das vorliegende Dokument befasst sich mit der technischen Aufgabe, eine zuverlässige Überwachung eines Fahrzeugs zu ermöglichen, insbesondere in Bezug auf den Eigentumsstatus des Fahrzeugs.

Die Aufgabe wird durch jeden der unabhängigen Ansprüche gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird eine Vorrichtung zur Überwachung eines (Kraft-) Fahrzeugs beschrieben. Die Vorrichtung ist eingerichtet, eine Sequenz von Positionen des Fahrzeugs an einer entsprechenden Sequenz von Zeitpunkten zu ermitteln. Die Positionen können anhand eines Positionssensors (z.B. anhand eines GPS Empfängers) des Fahrzeugs ermittelt werden. Es kann somit ermittelt werden, an welchen Positionen das Fahrzeug an unterschiedlichen (aufeinanderfolgenden) Zeitpunkten angeordnet war. Die Position des Fahrzeugs kann z.B. einmal pro Stunde oder einmal pro Tag ermittelt und in der Sequenz von Zeitpunkten angezeigt werden. Alternativ oder ergänzend kann die Position des Fahrzeugs an einem Zeitpunkt ermittelt werden, wenn das Fahrzeug abgestellt und/oder geparkt ist.

Die Vorrichtung ist ferner eingerichtet, auf Basis der Sequenz von Positionen zu bestimmen, ob an einem Zeitpunkt aus der Sequenz von Zeitpunkten möglicherweise ein Eigentümerwechsel des Fahrzeugs stattgefunden hat. Zu diesem Zweck kann eine statistische Analyse der Positionen aus der Sequenz von Positionen erfolgen.

Die Vorrichtung kann insbesondere eingerichtet sein, die Positionen aus der Sequenz von Positionen jeweils einem Zeitintervall aus einer Mehrzahl von unterschiedlichen und/oder aufeinanderfolgenden Zeitintervallen zuzuordnen. Dabei können die einzelnen Zeitintervalle derart lang sein, dass ein Zeitintervall jeweils mehrere Zeitpunkte aus der Sequenz von Zeitpunkten umfasst. Die einzelnen Zeitpunkte können somit in unterschiedliche (aufeinanderfolgende) Zeitintervalle gruppiert werden. Die Positionen an den unterschiedlichen Zeitpunkten können dann den unterschiedlichen Zeitintervallen zugeordnet werden. Es kann somit für die Mehrzahl von Zeitintervallen eine entsprechende Mehrzahl von Mengen von Positionen bereitgestellt werden. Eine Menge von Positionen für ein Zeitintervall kann z.B. 20 oder mehr, oder 100 oder mehr, oder 1000 oder mehr Positionen aufweisen (z.B. für ein Zeitintervall von 30 Tagen).

Die Vorrichtung kann ferner eingerichtet sein, für jedes der Mehrzahl von Zeitintervallen mittels eines Cluster-Algorithmus (z.B. mittels des DBSCAN Algorithmus) jeweils Positions-Cluster der dem jeweiligen Zeitintervall zugeordneten Positionen zu ermitteln. Dabei kann die Clusterung der Positionen in Abhängigkeit von ein oder mehreren Cluster-Parametern erfolgen. Beispielhafte Cluster-Parameter sind die minimale Anzahl von Positionen pro Cluster und/oder der maximale Abstand zwischen zwei Positionen innerhalb eines Clusters und/oder der maximale zulässige Radius des Positions-Clusters um ein Zentrum bzw. um ein Centroid des Positions-Clusters.

Es können somit pro Zeitintervall jeweils ein oder mehrere Positions-Cluster bereitgestellt werden. Die einzelnen Positions-Cluster zeigen dabei Positionen an, an denen das Fahrzeug in dem jeweiligen Zeitintervall relativ häufig angeordnet war.

Es kann dann in besonders präziser Weise auf Basis der Positions-Cluster für die Mehrzahl von Zeitintervallen bestimmt werden, ob an einem Zeitpunkt aus der Sequenz von Zeitpunkten möglicherweise ein Eigentümerwechsel des Fahrzeugs stattgefunden hat.

Die Vorrichtung ermöglicht es somit, in präziser und zuverlässiger Weise auf Basis der Nutzung, insbesondere auf Basis der Positionen, eines Fahrzeugs den Eigentumsstatus des Fahrzeugs zu ermitteln.

Die Vorrichtung kann ferner eingerichtet sein, zumindest eine Maßnahme in Bezug auf das Fahrzeug zu veranlassen, wenn bestimmt wird, dass möglicherweise ein Eigentümerwechsel des Fahrzeugs stattgefunden hat. Die Vorrichtung kann z.B. eingerichtet sein, als Maßnahme zu veranlassen, dass ein Hinweis in Bezug auf den erkannten Eigentümerwechsel an einen Nutzer des Fahrzeugs ausgegeben wird. Der Hinweis kann insbesondere über eine Benutzerschnittstelle des Fahrzeugs und/oder über ein Anwendergerät (etwa ein Smartphone) des Nutzers ausgegeben werden. Durch die Ausgabe eines Hinweises kann insbesondere überprüft werden, ob der erkannte, mögliche Eigentümerwechsel des Fahrzeugs auch tatsächlich stattgefunden hat. Des Weiteren kann durch die Ausgabe eines Hinweises bewirkt werden, dass sich der tatsächliche Eigentümer des Fahrzeugs um ein (ggf. erforderliche) Wartung des Fahrzeugs kümmert.

Alternativ oder ergänzend kann die Vorrichtung eingerichtet sein, als Maßnahme zu veranlassen, dass ein Fernzugriff auf das Fahrzeug durch ein Anwendergerät (etwa ein Smartphone) des Nutzers, insbesondere des bisherigen Eigentümers, des Fahrzeugs überprüft und/oder automatisch unterbunden wird. So kann die Sicherheit des Betriebs des Fahrzeugs erhöht werden. Insbesondere kann so ein ggf. unzulässiger Fernzugriff auf das Fahrzeug unterbunden werden.

Die Vorrichtung kann eingerichtet sein, einen Grad an Überscheidungen der Positions-Cluster für ein Paar von direkt aufeinanderfolgenden Zeitintervallen zu ermitteln. Der Grad an Überscheidungen der Positions-Cluster für ein Paar von direkt aufeinanderfolgenden Zeitintervallen kann dabei z.B. auf Basis der Anzahl von Positions-Cluster für die unterschiedlichen Zeitintervalle ermittelt werden, die sich überschneiden. Alternativ oder ergänzend kann der Grad an Überscheidungen auf Basis des Grads der Überlappung von Positions-Clustern für die unterschiedlichen Zeitintervalle ermittelt werden. Zur Ermittlung des Grads der Überlappung von zwei Positions-Clustern können z.B. beide Positions-Cluster als Kreise mit einem bestimmten Radius um ein jeweiliges Cluster-Zentrum betrachtet werden. Es kann dann der Grad der Überlappung der beiden Kreise ermittelt werden.

Die Vorrichtung kann ferner eingerichtet sein, auf Basis des Grads an Überscheidungen der Positions-Cluster zu bestimmen, ob zwischen den direkt aufeinanderfolgenden Zeitintervallen möglicherweise ein Eigentümerwechsel des Fahrzeugs stattgefunden hat. Insbesondere kann die Vorrichtung eingerichtet sein, den ermittelten Grad an Überscheidungen der Positions-Cluster für ein Paar von direkt aufeinanderfolgenden Zeitintervallen mit einem Überschneidungs-Schwellenwert zu vergleichen. Es kann dann in besonders präziser Weise in Abhängigkeit von dem Vergleich bestimmt werden, ob zwischen den direkt aufeinanderfolgenden Zeitintervallen möglicherweise ein Eigentümerwechsel des Fahrzeugs stattgefunden hat.

Die Vorrichtung kann eingerichtet sein, für jedes Paar von direkt aufeinanderfolgenden Zeitintervallen aus der Mehrzahl von Zeitintervallen einen Grad an Überscheidungen der Positions-Cluster zu ermitteln. Es kann dann auf Basis des Grads an Überscheidungen der Positions-Cluster für die unterschiedlichen Paare von direkt aufeinanderfolgenden Zeitintervallen in zuverlässiger Weise ermittelt werden, zwischen welchen Zeitintervallen aus der Mehrzahl von Zeitintervallen möglicherweise ein Eigentümerwechsel des Fahrzeugs stattgefunden hat.

Die Vorrichtung kann eingerichtet sein, die Sequenz von Zeitpunkten in Zeitintervalle einer bestimmten Zeitdauer (z.B. 1 Monat) zu unterteilen, um die Mehrzahl von Zeitintervallen zu ermitteln. Des Weiteren kann die Vorrichtung eingerichtet sein, die Zeitdauer der Zeitintervalle zu verändern, um unterschiedliche Mehrzahlen von Zeitintervallen mit jeweils unterschiedlich langen Zeitdauern zu ermitteln. Es können somit unterschiedlichen Zeitintervalle mit unterschiedlichen Zeitdauern (z.B. 2 Wochen, 1 Monat, 2 Monate) betrachtet werden.

Es können dann jeweils Positions-Cluster für die unterschiedlichen Mehrzahlen von Zeitintervallen ermittelt werden (auf Basis der Sequenz von Positionen). Des Weiteren kann auf Basis der Positions-Cluster für die unterschiedlichen Mehrzahlen von Zeitintervallen bestimmt werden, ob an einem Zeitpunkt aus der Sequenz von Zeitpunkten möglicherweise ein Eigentümerwechsel des Fahrzeugs stattgefunden hat. Durch die Betrachtung von unterschiedlich langen Zeitintervallen kann die Zuverlässigkeit der Erkennung eines Eigentümerwechsels weiter erhöht werden.

Gemäß einem weiteren Aspekt wird ein (Straßen-)Kraftfahrzeug (insbesondere ein Personenkraftwagen oder ein Lastkraftwagen oder ein Bus oder ein Motorrad) beschrieben, das die in diesem Dokument beschriebene Vorrichtung umfasst.

Gemäß einem weiteren Aspekt wird eine Fahrzeug-externe Einheit beschrieben, die die in diesem Dokument beschriebene Vorrichtung umfasst. Die Vorrichtung kann eingerichtet sein, eine Vielzahl von unterschiedlichen Fahrzeugen (jeweils auf Basis einer Sequenz von Positionen für das jeweilige Fahrzeug) zu überwachen (insbesondere in Bezug auf den Eigentumsstatus des jeweiligen Fahrzeugs).

Gemäß einem weiteren Aspekt wird ein Verfahren zur Überwachung eines (Kraft- ) Fahrzeugs beschrieben. Das Verfahren umfasst das Ermitteln einer Sequenz von Positionen des Fahrzeugs an einer entsprechenden Sequenz von Zeitpunkten. Des Weiteren umfasst das Verfahren das Bestimmen, auf Basis der Sequenz von Positionen, ob an einem Zeitpunkt aus der Sequenz von Zeitpunkten möglicherweise ein Eigentümerwechsel des Fahrzeugs stattgefunden hat. Das Verfahren kann ferner umfassen, das Bewirken zumindest einer Maßnahme in Bezug auf das Fahrzeug, wenn bestimmt wird, dass möglicherweise ein Eigentümerwechsel des Fahrzeugs stattgefunden hat.

Gemäß einem weiteren Aspekt wird ein Software (SW) Programm beschrieben. Das SW Programm kann eingerichtet werden, um auf einem Prozessor ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 beispielhafte Komponenten eines Fahrzeugs;
Figuren 2a und 2b beispielhafte Positionsdaten eines Fahrzeugs: und
Figur 3 ein Ablaufdiagramm eines beispielhaften Verfahrens zur Überwachung eines Fahrzeugs.

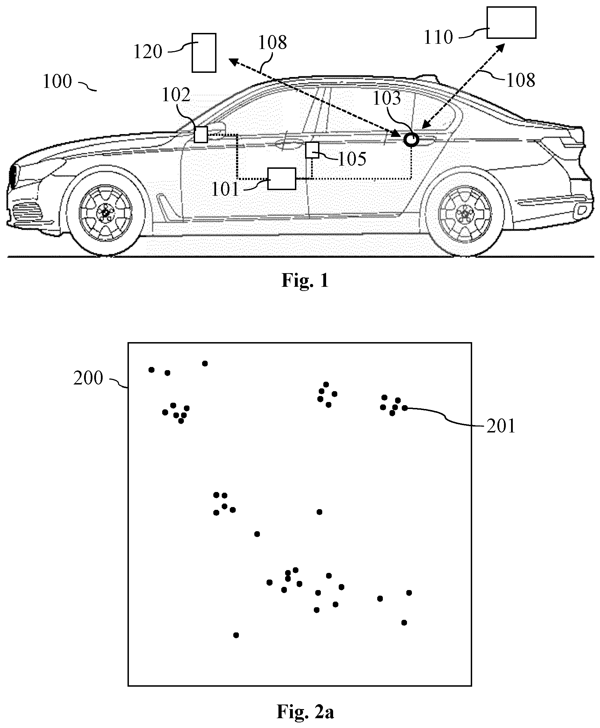

Wie eingangs dargelegt, befasst sich das vorliegende Dokument mit der zuverlässigen Überwachung eines Fahrzeugs, insbesondere in Bezug auf den Eigentumsstatus des Fahrzeugs. In diesem Zusammenhang zeigt Fig. 1 ein beispielhaftes Fahrzeug 100 mit einem Positionssensor 105 (z.B. mit einem GPS Empfänger), der eingerichtet ist, Positionsdaten (d.h. Sensordaten) in Bezug auf die Position des Fahrzeugs 100 zu erfassen.

Eine Steuereinheit 101 des Fahrzeugs 100 kann eingerichtet sein, auf Basis der Positionsdaten für eine Sequenz von Zeitpunkten eine Sequenz von Positionen des Fahrzeugs 100 zu ermitteln. Es kann somit ermittelt werden, an welchen Positionen das Fahrzeug 100 an unterschiedlichen Zeitpunkten angeordnet war. Die Positionen können z.B. Positionen innerhalb einer digitalen Karte eines Fahrbahnnetzes sein. Die Position des Fahrzeugs 100 kann mit einer bestimmten Abtastrate (z.B. eine Position pro Stunde oder pro Tag) ermittelt werden.

Die Sequenz von Positionen kann mittels einer Kommunikationseinheit 103 des Fahrzeugs 100 über eine (drahtlose) Kommunikationsverbindung 108 an eine (Fahrzeug-externe) Auswertevorrichtung 110 gesendet werden. Die Vorrichtung 110 kann eingerichtet sein, auf Basis der Sequenz von Positionen und auf Basis der Zeitangaben für die unterschiedlichen Positionen zu bestimmen, ob (möglicherweise) ein Eigentümerwechsel stattgefunden hat oder nicht. Insbesondere kann auf Basis der zeitlichen Sequenz von Positionen eine Hypothese für einen möglichen Eigentümerwechsel erstellt werden. Beispielsweise kann ermittelt werden, dass mit einer Wahrscheinlichkeit von x% ein Eigentümerwechsel stattgefunden hat (z.B. x=50 oder mehr, oder 70 oder mehr).

Fig. 2a zeigt eine beispielhafte digitale Karte 200, in der die unterschiedlichen Positionen 201 des Fahrzeugs 100 verzeichnet sind. Wie aus Fig. 2a ersichtlich, weist die Verteilung der Positionen 201 eines Fahrzeugs 100 typischerweise ein oder mehrere Häufungen auf (z.B. an dem Wohnort oder an der Arbeitsstätte des Eigentümers des Fahrzeugs 100). Die Vorrichtung 110 kann eingerichtet sein, einen Cluster-Algorithmus auf die zeitliche Sequenz von Positionen 201 des Fahrzeugs 100 anzuwenden. Ein beispielhafter Cluster-Algorithmus ist der DBSCAN Algorithmus.

Die Clusterung der zeitlichen Sequenz von Positionen 201 kann dabei separat für unterschiedliche Zeitintervalle erfolgen. Insbesondere kann die Sequenz von Positionen 201 bzw. die Sequenz von Zeitpunkten in unterschiedliche (direkt aufeinanderfolgende) Zeitintervalle unterteilt werden. Ein Zeitintervall kann z.B. eine Dauer von 30 Tagen aufweisen. Die unterschiedlichen Positionen 201 (mit der jeweiligen Zeitangabe) können dann in unterschiedliche Mengen von Positionen 201 für unterschiedliche Zeitintervalle aufgeteilt werden.

Es kann dann für jedes Zeitintervall für die jeweilige Menge von Positionen 201 eine örtliche Clusterung der Positionen 201 durchgeführt werden. Dabei können ein oder mehreren Cluster-Parameter berücksichtigt werden, wie z.B.
- der maximal zulässige Abstand zwischen den Positionen 201 eines Clusters; und/oder
- die minimal erforderliche Anzahl von Positionen 201 innerhalb eines Clusters; und/oder
- der maximal zulässige Radius eines Clusters um ein Zentrum des Clusters, bzw. der maximal zulässige Abstand einer Position 201 eines Clusters zu dem Zentrum des Clusters.

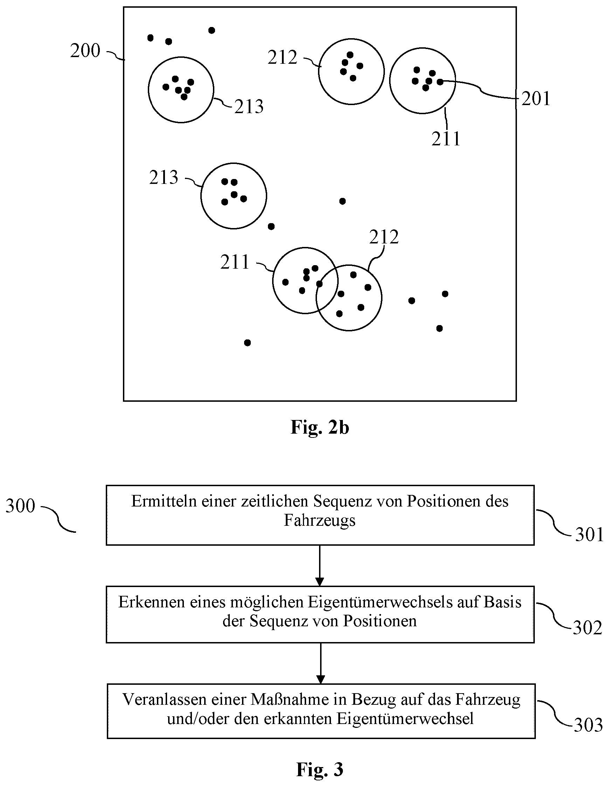

Fig. 2b zeigt beispielhafte Positions-Cluster 211, 212, 213 für unterschiedliche Zeitintervalle. Insbesondere zeigt Fig. 2b erste Positions-Cluster 211 für ein erstes Zeitintervall, zweite Positions-Cluster 212 für ein zweites Zeitintervall und dritte Positions-Cluster 213 für ein drittes Zeitintervall, wobei das zweite Zeitintervall (direkt) auf das erste Zeitintervall folgt und wobei das dritte Zeitintervall (direkt) auf das zweite Zeitintervall folgt.

Die Vorrichtung 110 kann ausgebildet sein, auf Basis der Positions-Cluster 211, 212, 213 zu bestimmen, ob ein Eigentümerwechsel des Fahrzeugs 100 stattgefunden hat oder nicht. Insbesondere kann auf Basis der Positions-Cluster 211, 212, 213 eine Hypothese dafür erstellt werden, dass (z.B. mit einer bestimmten Wahrscheinlichkeit) ein Eigentümerwechsel stattgefunden hat.

Die Vorrichtung 110 kann insbesondere eingerichtet sein, die Positions-Cluster 211, 212, 213 für zwei direkt aufeinanderfolgende Zeitintervalle miteinander zu vergleichen. Insbesondere kann überprüft werden, ob sich Positions-Cluster 211, 212, 213 für zwei direkt aufeinanderfolgende Zeitintervalle überschneiden oder nicht. Beispielsweise kann der Grad von Überschneidungen der Positions-Cluster 211, 212, 213 für zwei direkt aufeinanderfolgende Zeitintervalle ermittelt werden. Der Grad von Überschneidungen kann dabei abhängen von
- der Anzahl von Positions-Cluster 211, 212, 213 der unterschiedlichen Zeitintervalle, für die eine Überschneidung bzw. Überlappung vorliegt; und/oder
- dem Grad der Überlappung der Positions-Cluster 211, 212, 213 der unterschiedlichen Zeitintervalle.

Es kann dann auf Basis des Grads von Überschneidungen der Positions-Cluster 211, 212, 213 für zwei direkt aufeinanderfolgende Zeitintervalle bestimmt werden, ob zwischen den beiden Zeitintervallen ein Eigentümerwechsel stattgefunden hat oder nicht, bzw. es kann eine Hypothese für einen Eigentümerwechsel erstellt werden.

Die Vorrichtung 110 kann eingerichtet sein, die zeitliche Länge der betrachteten Zeitintervalle zu variieren (z.B. zu verlängern und/oder zu verkürzen). Die Positions-Cluster 211, 212, 213 können dann für unterschiedliche lange Zeitintervalle ermittelt werden. Des Weiteren kann jeweils auf Basis der Positions-Cluster 211, 212, 213 überprüft werden, ob (möglicherweise) ein Eigentümerwechsel stattgefunden hat, und zwischen welchen Zeitintervallen der Eigentümerwechsel stattgefunden hat. Durch die Variierung der zeitlichen Länge der Zeitintervalle kann die Genauigkeit der Ermittlung einer Hypothese für einen Eigentümerwechsel erhöht werden. Insbesondere können so zeitlich befristete Nutzungsänderungen des Fahrzeugs 100 (wie z.B. bei einer Urlaubsreise) und damit verbundene Fehlerkennungen eines Eigentümerwechsels detektiert und eliminiert werden.

Die Vorrichtung 110 kann ferner eingerichtet sein, bei Vorliegen einer Hypothese für einen Eigentümerwechsel und/oder nach Erkennen eines möglichen Eigentümerwechsels, ein oder mehrere Maßnahmen in Bezug auf das Fahrzeugs 100 durchzuführen. Insbesondere kann veranlasst werden, dass ein Hinweis an den Nutzer des Fahrzeugs 100 ausgegeben wird, um zu überprüfen, ob tatsächlich ein Eigentümerwechsel stattgefunden hat. Beispielsweise kann veranlasst werden, dass ein Hinweis über eine Benutzerschnittstelle 102 (z.B. auf einem Bildschirm und/oder über einen Lautsprecher des Fahrzeugs 100) ausgegeben wird. Der Nutzer des Fahrzeugs 100 kann z.B. durch den Hinweis aufgefordert werden, zu bestätigen, ob tatsächlich ein Eigentümerwechsel stattgefunden hat oder nicht. Des Weiteren kann der Nutzer des Fahrzeugs 100 aufgefordert werden, eine Wartung des Fahrzeugs 100 durchzuführen.

Alternativ oder ergänzend kann der Fernzugriff auf das Fahrzeug 100 nach einem erkannten möglichen Eigentümerwechsel gesperrt oder zumindest überprüft werden. Der Fernzugriff ermöglicht es z.B. dem Eigentümer des Fahrzeugs 100 über ein Anwendergerät 120 (z.B. ein Smartphone) auf das Fahrzeug 100 zuzugreifen. Dabei kann z.B. Fahrzeuginformation, etwa der Kilometerstand des Fahrzeugs 100 und/oder der Füllstand des Energiespeichers des Fahrzeugs 100, abgefragt werden. Des Weiteren kann es dem Eigentümer ggf. ermöglicht werden, das Fahrzeug 100 zu ver- bzw. zu entriegeln oder ein Fenster des Fahrzeugs 100 zu öffnen oder zu schießen.

Die Vorrichtung 110 kann eingerichtet sind, den Fernzugriff auf das Fahrzeug 100 in Reaktion auf einen erkannten, möglichen Eigentümerwechsel automatisch zu sperren. Dabei kann dem bisherigen Eigentümer ein Hinweis auf das Anwendergerät 120 des bisherigen Eigentümers gesendet werden, um dem bisherigen Eigentümer mitzuteilen, dass der Fernzugriff aus Sicherheitsgründen aufgrund eines erkannten, möglichen Eigentümerwechsels gesperrt wurde. Des Weiteren kann es dem bisherigen Eigentümer ermöglicht werden (ggf. erst nach Überprüfung des Eigentümerstatus, etwa durch Vorlage des Fahrzeugscheins), den Fernzugriff wieder freizuschalten. Die automatische Ermittlung eines möglichen Eigentümerwechsels ermöglicht somit einen besonders sicheren Betrieb eines Fahrzeugs 100.

Fig. 3 zeigt ein Ablaufdiagramm eines beispielhaften (ggf. Computerimplementierten) Verfahrens 300 zur Überwachung eines Fahrzeugs 100. Das Verfahren 300 ist insbesondere darauf ausgelegt, den Eigentümerstatus des Fahrzeugs 100 zu überwachen.

Das Verfahren 300 umfasst das Ermitteln 301 einer Sequenz von Positionen 201 des Fahrzeugs 100 an einer entsprechenden Sequenz von Zeitpunkten. Die Sequenz von Positionen 201 kann z.B. anhand eines Positionssensors 105 des Fahrzeugs 100 ermittelt werden. Die Zeitpunkte der Sequenz von Zeitpunkten können äquidistant sein (z.B. mit einem zeitlichen Abstand von ein oder mehreren Stunden oder einem Tag). Alternativ oder ergänzend können die Zeitpunkte Zeitpunkte sein, an denen das Fahrzeug 100 abgestellt und/oder geparkt ist.

Des Weiteren umfasst das Verfahren 300 das Bestimmen 302, auf Basis der Sequenz von Positionen 201, ob an einem Zeitpunkt aus der Sequenz von Zeitpunkten möglicherweise ein Eigentümerwechsel des Fahrzeugs 100 stattgefunden hat. Insbesondere kann auf Basis von Positions-Cluster 211, 212, 213 der Positionen 201 für unterschiedlichen Zeitintervalle überprüft werden, ob zwischen zwei Zeitintervallen möglicherweise ein Eigentümerwechsel stattgefunden hat. Die einzelnen Zeitintervalle können z.B. jeweils 100 oder mehr Zeitpunkte bzw. Positionen 201 aus der Sequenz von Zeitpunkten bzw. aus der Sequenz von Positionen 201 umfassen.

Das Verfahren 300 kann ferner umfassen, das Bewirken 303 zumindest einer Maßnahme in Bezug auf das Fahrzeug 100, wenn bestimmt wird, dass möglicherweise ein Eigentümerwechsel des Fahrzeugs 100 stattgefunden hat. Als Maßnahme kann dabei z.B. ein Hinweis an den bisherigen Eigentümer des Fahrzeugs 100 ausgegeben werden und/oder es kann ein Fernzugriff auf das Fahrzeugs 100 überprüft und/oder unterbunden werden.

Durch die in diesem Dokument beschriebenen Maßnahmen kann eine zuverlässige Überwachung eines Fahrzeugs 100, insbesondere in Bezug auf den Eigentümerstatus, ermöglicht werden.

Die vorliegende Erfindung ist nicht auf die gezeigten Ausführungsbeispiele beschränkt. Insbesondere ist zu beachten, dass die Beschreibung und die Figuren nur beispielhaft das Prinzip der vorgeschlagenen Verfahren, Vorrichtungen und Systeme veranschaulichen sollen.

## Patentansprüche

1. Vorrichtung (110) zur Überwachung eines Fahrzeugs (100); wobei die Vorrichtung (110) eingerichtet ist,
- anhand eines Positionssensors (105) des Fahrzeugs (100) eine Sequenz von Positionen (201) des Fahrzeugs (100) an einer entsprechenden Sequenz von Zeitpunkten zu ermitteln;
- auf Basis der Sequenz von Positionen (201) zu bestimmen, ob an einem Zeitpunkt aus der Sequenz von Zeitpunkten möglicherweise ein Eigentümerwechsel des Fahrzeugs (100) stattgefunden hat; und
- zumindest eine Maßnahme in Bezug auf das Fahrzeug (100) zu veranlassen, wenn bestimmt wird, dass möglicherweise ein Eigentümerwechsel des Fahrzeugs (100) stattgefunden hat; wobei die zumindest eine Maßnahme umfasst
- Ausgeben eines Hinweises in Bezug auf den erkannten Eigentümerwechsel an einen Nutzer des Fahrzeugs (100) über eine Benutzerschnittstelle (102) des Fahrzeugs (100) und/oder über ein Anwendergerät (120) des Nutzers; und/oder
- Unterbinden eines Fernzugriffs auf das Fahrzeug (100) durch ein Anwendergerät (120) eines bisherigen Eigentümers des Fahrzeugs (100).

2. Vorrichtung (110) gemäß Anspruch 1, wobei die Vorrichtung (110) eingerichtet ist,
- die Positionen (201) aus der Sequenz von Positionen (201) jeweils einem Zeitintervall aus einer Mehrzahl von Zeitintervallen zuzuordnen; wobei ein Zeitintervall jeweils mehrere Zeitpunkte aus der Sequenz von Zeitpunkten umfasst;
- für jedes der Mehrzahl von Zeitintervallen mittels eines Cluster-Algorithmus jeweils Positions-Cluster (211, 212, 213) der dem jeweiligen Zeitintervall zugeordneten Positionen (201) zu ermitteln; und
- auf Basis der Positions-Cluster (211, 212, 213) für die Mehrzahl von Zeitintervallen zu bestimmen, ob an einem Zeitpunkt aus der Sequenz von Zeitpunkten möglicherweise ein Eigentümerwechsel des Fahrzeugs (100) stattgefunden hat.

3. Vorrichtung (110) gemäß Anspruch 2, wobei die Vorrichtung (110) eingerichtet ist,
- einen Grad an Überscheidungen der Positions-Cluster (211, 212, 213) für ein Paar von direkt aufeinanderfolgenden Zeitintervallen zu ermitteln; und
- auf Basis des Grads an Überscheidungen der Positions-Cluster (211, 212, 213) zu bestimmen, ob zwischen den direkt aufeinanderfolgenden Zeitintervallen möglicherweise ein Eigentümerwechsel des Fahrzeugs (100) stattgefunden hat.

4. Vorrichtung (110) gemäß Anspruch 3, wobei die Vorrichtung (110) eingerichtet ist,
- für jedes Paar von direkt aufeinanderfolgenden Zeitintervallen aus der Mehrzahl von Zeitintervallen einen Grad an Überscheidungen der Positions-Cluster (211, 212, 213) zu ermitteln; und
- auf Basis des Grads an Überscheidungen der Positions-Cluster (211, 212, 213) für die unterschiedlichen Paare von direkt aufeinanderfolgenden Zeitintervallen zu ermitteln, zwischen welchen Zeitintervallen aus der Mehrzahl von Zeitintervallen möglicherweise ein Eigentümerwechsel des Fahrzeugs (100) stattgefunden hat.

5. Vorrichtung (110) gemäß einem der Ansprüche 3 bis 4, wobei die Vorrichtung (110) eingerichtet ist, den Grad an Überscheidungen der Positions-Cluster (211, 212, 213) für ein Paar von direkt aufeinanderfolgenden Zeitintervallen zu ermitteln,
- auf Basis einer Anzahl von Positions-Cluster (211, 212, 213) für die unterschiedlichen Zeitintervalle, die sich überschneiden; und/oder
- auf Basis eines Grads der Überlappung von Positions-Clustern (211, 212, 213) für die unterschiedlichen Zeitintervalle.

6. Vorrichtung (110) gemäß einem der Ansprüche 3 bis 5, wobei die Vorrichtung (110) eingerichtet ist,
- den ermittelten Grad an Überscheidungen der Positions-Cluster (211, 212, 213) für ein Paar von direkt aufeinanderfolgenden Zeitintervallen mit einem Überschneidungs-Schwellenwert zu vergleichen; und
- in Abhängigkeit von dem Vergleich zu bestimmen, ob zwischen den direkt aufeinanderfolgenden Zeitintervallen möglicherweise ein Eigentümerwechsel des Fahrzeugs (100) stattgefunden hat.

7. Vorrichtung (110) gemäß einem der Ansprüche 2 bis 6, wobei die Vorrichtung (110) eingerichtet ist,
- die Sequenz von Zeitpunkten in Zeitintervalle einer bestimmten Zeitdauer zu unterteilen, um die Mehrzahl von Zeitintervallen zu ermitteln;
- die Zeitdauer der Zeitintervalle zu verändern, um unterschiedliche Mehrzahlen von Zeitintervallen mit jeweils unterschiedlich langen Zeitdauern zu ermitteln;
- Positions-Cluster (211, 212, 213) für die unterschiedlichen Mehrzahlen von Zeitintervallen zu ermitteln; und
- auf Basis der Positions-Cluster (211, 212, 213) für die unterschiedlichen Mehrzahlen von Zeitintervallen zu bestimmen, ob an einem Zeitpunkt aus der Sequenz von Zeitpunkten möglicherweise ein Eigentümerwechsel des Fahrzeugs (100) stattgefunden hat.

8. Verfahren (300) zur Überwachung eines Fahrzeugs (100); wobei das Verfahren (300) umfasst,
- Ermitteln (301) einer Sequenz von Positionen (201) des Fahrzeugs (100) an einer entsprechenden Sequenz von Zeitpunkten anhand eines Positionssensors (105) des Fahrzeugs (100);
- Bestimmen (302), auf Basis der Sequenz von Positionen (201), ob an einem Zeitpunkt aus der Sequenz von Zeitpunkten möglicherweise ein Eigentümerwechsel des Fahrzeugs (100) stattgefunden hat; und
- Bewirken (303) zumindest einer Maßnahme in Bezug auf das Fahrzeug (100), wenn bestimmt wird, dass möglicherweise ein Eigentümerwechsel des Fahrzeugs (100) stattgefunden hat; wobei die zumindest eine Maßnahme umfasst
- Ausgeben eines Hinweises in Bezug auf den erkannten Eigentümerwechsel an einen Nutzer des Fahrzeugs (100) über eine Benutzerschnittstelle (102) des Fahrzeugs (100) und/oder über ein Anwendergerät (120) des Nutzers; und/oder
- Unterbinden eines Fernzugriffs auf das Fahrzeug (100) durch ein Anwendergerät (120) eines bisherigen Eigentümers des Fahrzeugs (100).

## Claims

1. Device (110) for monitoring a vehicle (100); wherein the device (110) is configured to
- determine a sequence of positions (201) of the vehicle (100) at a corresponding sequence of time points using a position sensor (105) of the vehicle (100);
- determine, based on the sequence of positions (201), whether a change of ownership of the vehicle (100) may have occurred at a time point from the sequence of time points; and
- initiate at least one measure with respect to the vehicle (100) if it is determined that a change of ownership of the vehicle (100) may have occurred; wherein the at least one measure comprises
- outputting an indication regarding the detected change of ownership to a user of the vehicle (100) via a user interface (102) of the vehicle (100) and/or via a user device (120) of the user; and/or
- preventing remote access to the vehicle (100) by a user device (120) of a previous owner of the vehicle (100).

2. Device (110) according to claim 1, wherein the device (110) is configured to
- assign the positions (201) from the sequence of positions (201) each to a time interval from a plurality of time intervals; wherein a time interval comprises several time points from the sequence of time points;
- determine for each of the plurality of time intervals, using a cluster algorithm, position clusters (211, 212, 213) of the positions (201) assigned to the respective time interval; and
- determine, based on the position clusters (211, 212, 213) for the plurality of time intervals, whether a change of ownership of the vehicle (100) may have occurred at a time point from the sequence of time points.

3. Device (110) according to claim 2, wherein the device (110) is configured to
- determine a degree of overlap of the position clusters (211, 212, 213) for a pair of directly consecutive time intervals; and
- determine, based on the degree of overlap of the position clusters (211, 212, 213), whether a change of ownership of the vehicle (100) may have occurred between the directly consecutive time intervals.

4. Device (110) according to claim 3, wherein the device (110) is configured to
- determine a degree of overlap of the position clusters (211, 212, 213) for each pair of directly consecutive time intervals from the plurality of time intervals; and
- determine, based on the degree of overlap of the position clusters (211, 212, 213) for the different pairs of directly consecutive time intervals, between which time intervals from the plurality of time intervals a change of ownership of the vehicle (100) may have occurred.

5. Device (110) according to any one of claims 3 to 4, wherein the device (110) is configured to determine the degree of overlap of the position clusters (211, 212, 213) for a pair of directly consecutive time intervals
- based on a number of position clusters (211, 212, 213) for the different time intervals that overlap; and/or
- based on a degree of overlap of position clusters (211, 212, 213) for the different time intervals.

6. Device (110) according to any one of claims 3 to 5, wherein the device (110) is configured to
- compare the determined degree of overlap of the position clusters (211, 212, 213) for a pair of directly consecutive time intervals with an overlap threshold; and
- determine, depending on the comparison, whether a change of ownership of the vehicle (100) may have occurred between the directly consecutive time intervals.

7. Device (110) according to any one of claims 2 to 6, wherein the device (110) is configured to
- divide the sequence of time points into time intervals of a specific duration to determine the plurality of time intervals;
- change the duration of the time intervals to determine different pluralities of time intervals with different durations each;
- determine position clusters (211, 212, 213) for the different pluralities of time intervals; and
- determine, based on the position clusters (211, 212, 213) for the different pluralities of time intervals, whether a change of ownership of the vehicle (100) may have occurred at a time point from the sequence of time points.

8. Method (300) for monitoring a vehicle (100); wherein the method (300) comprises
- determining (301) a sequence of positions (201) of the vehicle (100) at a corresponding sequence of time points using a position sensor (105) of the vehicle (100);
- determining (302), based on the sequence of positions (201), whether a change of ownership of the vehicle (100) may have occurred at a time point from the sequence of time points; and
- effecting (303) at least one measure with respect to the vehicle (100) if it is determined that a change of ownership of the vehicle (100) may have occurred; wherein the at least one measure comprises
- outputting an indication regarding the detected change of ownership to a user of the vehicle (100) via a user interface (102) of the vehicle (100) and/or via a user device (120) of the user; and/or
- preventing remote access to the vehicle (100) by a user device (120) of a previous owner of the vehicle (100).

## Revendications

1. Dispositif (110) pour surveiller un véhicule (100) ; où le dispositif (110) est configuré pour
- déterminer une séquence de positions (201) du véhicule (100) à une séquence correspondante de moments temporels à l'aide d'un capteur de position (105) du véhicule (100) ;
- déterminer, sur la base de la séquence de positions (201), si un changement de propriétaire du véhicule (100) a pu avoir lieu à un moment de la séquence de moments temporels ; et
- initier au moins une mesure concernant le véhicule (100) s'il est déterminé qu'un changement de propriétaire du véhicule (100) a pu avoir lieu ; où la au moins une mesure comprend
- émettre une indication concernant le changement de propriétaire détecté à un utilisateur du véhicule (100) via une interface utilisateur (102) du véhicule (100) et/ou via un appareil utilisateur (120) de l'utilisateur ; et/ou
- empêcher un accès à distance au véhicule (100) par un appareil utilisateur (120) d'un ancien propriétaire du véhicule (100).

2. Dispositif (110) selon la revendication 1, où le dispositif (110) est configuré pour
- attribuer les positions (201) de la séquence de positions (201) chacune à un intervalle de temps parmi une pluralité d'intervalles de temps ; où un intervalle de temps comprend plusieurs moments temporels de la séquence de moments temporels ;
- déterminer pour chacun de la pluralité d'intervalles de temps, à l'aide d'un algorithme de clustering, des clusters de positions (211, 212, 213) des positions (201) attribuées à l'intervalle de temps respectif ; et
- déterminer, sur la base des clusters de positions (211, 212, 213) pour la pluralité d'intervalles de temps, si un changement de propriétaire du véhicule (100) a pu avoir lieu à un moment de la séquence de moments temporels.

3. Dispositif (110) selon la revendication 2, où le dispositif (110) est configuré pour
- déterminer un degré de chevauchement des clusters de positions (211, 212, 213) pour une paire d'intervalles de temps directement consécutifs ; et
- déterminer, sur la base du degré de chevauchement des clusters de positions (211, 212, 213), si un changement de propriétaire du véhicule (100) a pu avoir lieu entre les intervalles de temps directement consécutifs.

4. Dispositif (110) selon la revendication 3, où le dispositif (110) est configuré pour
- déterminer un degré de chevauchement des clusters de positions (211, 212, 213) pour chaque paire d'intervalles de temps directement consécutifs de la pluralité d'intervalles de temps ; et
- déterminer, sur la base du degré de chevauchement des clusters de positions (211, 212, 213) pour les différentes paires d'intervalles de temps directement consécutifs, entre quels intervalles de temps de la pluralité d'intervalles de temps un changement de propriétaire du véhicule (100) a pu avoir lieu.

5. Dispositif (110) selon l'une quelconque des revendications 3 à 4, où le dispositif (110) est configuré pour déterminer le degré de chevauchement des clusters de positions (211, 212, 213) pour une paire d'intervalles de temps directement consécutifs
- sur la base d'un nombre de clusters de positions (211, 212, 213) pour les différents intervalles de temps qui se chevauchent ; et/ou
- sur la base d'un degré de chevauchement des clusters de positions (211, 212, 213) pour les différents intervalles de temps.

6. Dispositif (110) selon l'une quelconque des revendications 3 à 5, où le dispositif (110) est configuré pour
- comparer le degré de chevauchement déterminé des clusters de positions (211, 212, 213) pour une paire d'intervalles de temps directement consécutifs avec un seuil de chevauchement ; et
- déterminer, en fonction de la comparaison, si un changement de propriétaire du véhicule (100) a pu avoir lieu entre les intervalles de temps directement consécutifs.

7. Dispositif (110) selon l'une quelconque des revendications 2 à 6, où le dispositif (110) est configuré pour
- diviser la séquence de moments temporels en intervalles de temps d'une durée spécifique pour déterminer la pluralité d'intervalles de temps ;
- modifier la durée des intervalles de temps pour déterminer différentes pluralités d'intervalles de temps avec des durées différentes chacune ;
- déterminer des clusters de positions (211, 212, 213) pour les différentes pluralités d'intervalles de temps ; et
- déterminer, sur la base des clusters de positions (211, 212, 213) pour les différentes pluralités d'intervalles de temps, si un changement de propriétaire du véhicule (100) a pu avoir lieu à un moment de la séquence de moments temporels.

8. Procédé (300) pour surveiller un véhicule (100) ; où le procédé (300) comprend
- déterminer (301) une séquence de positions (201) du véhicule (100) à une séquence correspondante de moments temporels à l'aide d'un capteur de position (105) du véhicule (100) ;
- déterminer (302), sur la base de la séquence de positions (201), si un changement de propriétaire du véhicule (100) a pu avoir lieu à un moment de la séquence de moments temporels ; et
- effectuer (303) au moins une mesure concernant le véhicule (100) s'il est déterminé qu'un changement de propriétaire du véhicule (100) a pu avoir lieu ; où la au moins une mesure comprend
- émettre une indication concernant le changement de propriétaire détecté à un utilisateur du véhicule (100) via une interface utilisateur (102) du véhicule (100) et/ou via un appareil utilisateur (120) de l'utilisateur ; et/ou
- empêcher un accès à distance au véhicule (100) par un appareil utilisateur (120) d'un ancien propriétaire du véhicule (100).
